# EUROPEAN PATENT APPLICATION

(11) **EP 2 261 640 A1**
(43) Date of publication of application: **15.12.2010**
(21) Application number: 10165584.3
(22) Date of filing: 10.06.2010
(51) Int. Cl.: G01N 21/35, G01N 21/39, G01S 17/02

(54) **Stand-off active detection of chemical substances**

(30) Priority: 11.06.2009 IT TO20090449
(71) Applicant: SELEX Galileo S.p.A., Campi Bisenzio (IT)
(72) Inventor: Riti, Emidio, 00036, PALESTRINA (IT)
(74) Representative: Jorio, Paolo

(57) **Abstract**

The present invention relates to a method (20) for detecting N gases, each having a corresponding spectral signature. The method (20) comprises determining (201), on the basis of a Principal-Component Analysis of the spectral signatures of the N gases, M wavelengths, on the basis of which said spectral signatures can be represented. Furthermore, the method (20) comprises emitting (202), for each of the M wavelengths determined, a corresponding electromagnetic radiation having said wavelength. The method (20) also comprises acquiring (203), for each of the M wavelengths determined, a corresponding back-scattered electromagnetic radiation having said wavelength. Finally, the method (20) comprises detecting and identifying (204) one of the N gases on the basis of the corresponding spectral signature and of at least one electromagnetic radiation acquired.

## Description

The present invention relates to a stand-off gas-detection method, in particular to a method for stand-off gas detection and identification, specifically for toxic industrial gases (TICs) and noxious chemical substances, immersed in background gases and interfering gases typical of an urban environment. I n general, in order to detect the presence of a gas both techniques for point detection and stand-off detection techniques are known.

Broadly speaking, a point detection system of a specific gas comprises:
- a receptor, capable to bind to molecules of the specific gas;
- a transducer, coupled to the receptor and configured for generating an electrical signal on the basis of molecules that have bound to the receptor; and
- processing means, coupled to the transducer and configured for detecting a possible presence of the specific gas on the basis of the electrical signal generated by the transducer.

A first problem linked to point detection systems derives from the fact that the receptor has to be replaced or decontaminated whenever it comes into contact with the gas to be detected because, once bound to one or more molecules of said gas, it is contaminated and hence no longer usable for detection.

Furthermore, from a safety standpoint, a second and probably more serious problem linked to point detection systems derives from the fact that said systems are able to issue an alarm regarding the presence of a gas, in particular a toxic gas, only once they have come into contact therewith, it hence not being able to issue an alarm that anticipates arrival of the toxic gas.

Consequently, from the safety standpoint, stand-off detection is extremely advantageous as compared to point detection in so far as it is able to issue an alarm of the threat anticipated with respect to arrival of the danger.

In addition, with the stand-off detection there is no longer the problem, mentioned above, of contamination or saturation inherent in point detection systems, since a stand-off detection system never interacts directly with the gas molecules.

Consequently, for stand-off detection systems no decontamination step is any longer necessary.

As is known, many stand-off detection techniques of chemical substances in the gaseous phase are based upon spectrophotometry of absorption of the gas molecules in the spectral region of the infrared (IR).

In general, when an electromagnetic radiation, in particular constituted by spectral components each having a respective wavelength comprised in the spectral region of the infrared (IR), impinges upon a substance, in particular in the gaseous phase, some of the spectral components of said electromagnetic radiation are absorbed by the substance.

In particular, when a gas is irradiated by IR electromagnetic radiation, in reception an absorption is observed, i.e., a reduction in the intensity of the radiation received, at specific wavelengths.

Said wavelengths at which the intensity is attenuated enable identification of the presence of different gas molecules and evaluation of their corresponding concentration.

Consequently, the IR spectrum of absorption represents an unambiguous spectral signature that certifies the presence of gases, for example noxious chemical agents and/or toxic industrial gases, even in the presence of background and/or interfering gases.

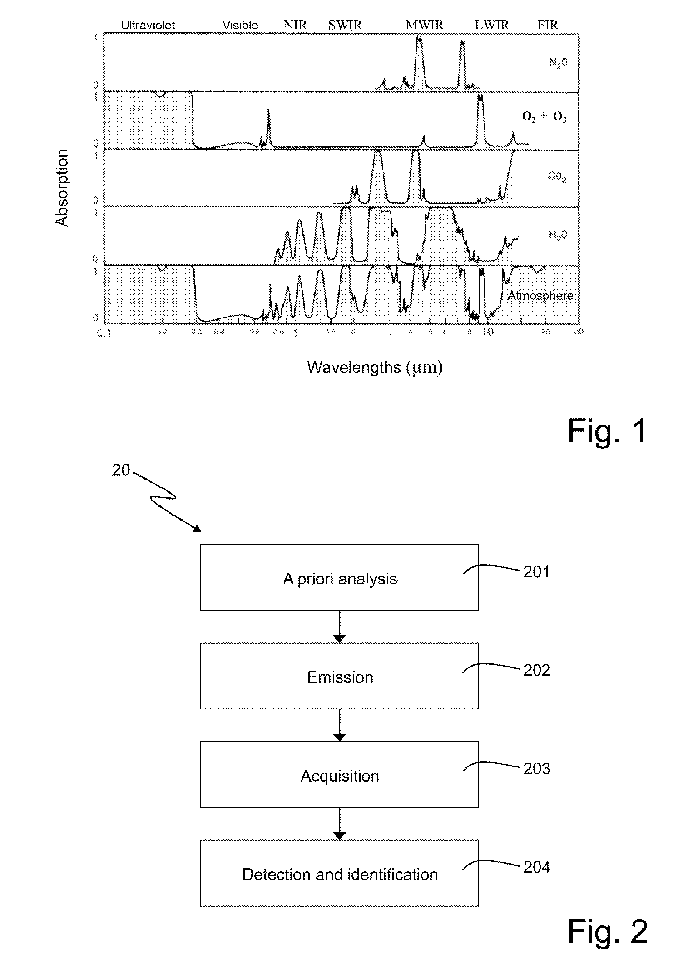

In this regard, illustrated in Figure 1 are five graphs representing absorption values, comprised between zero and one, respectively of nitrogen dioxide N₂O, of oxygen O₂ and ozone O₃, of carbon dioxide CO₂, of water vapour H₂O, and of the atmosphere, at different wavelengths.

Furthermore, also indicated in Figure 1, at the different wavelengths, are the corresponding spectral regions, namely:
- the ultraviolet up to 0.4 µm;
- the visible between 0.4 and 0.7 µm;
- the near infrared (NIR) between 0.75 and 1.4 µm;
- the short-wave infrared (SWIR) between 1.4 and 3 µm;
- the medium-wave infrared (MWIR) between 3 and 8 µm;
- the long-wave infrared (LWIR) between 8 and 15 µm; and
- the far infrared (FIR) from 15 µm.

From an analysis of Figure 1 it may be noted how each gas is characterized by respective absorption values at the wavelengths of the NIR, SWIR, MWIR, LWIR and FIR.

To return to stand-off gas detection, this can be of a passive type or of an active type.

In particular, stand-off gas detection of a passive type is based upon an examination and a comparison of the natural radiation, acquired at different instants and characterized by a continuously variable and unknown spectrum, with respect to a known reference spectrum.

Through sophisticated algorithms of examination of the differences between the known and acquired spectra, the stand-off gas-detection techniques of a passive type are able to detect the occurrence of absorption of some wavelengths and hence the presence of respective gases.

On account of the marked variability in time of the ambient spectrum and of the low intrinsic levels of the natural radiation, the stand-off gas-detection techniques of a passive type yield results characterized by high false-alarm probability (FAP), especially in urban contexts, and generally are aimed at substances that can be more easily detected owing to the availability of high-sensitivity sensors.

Furthermore, the stand-off gas-detection techniques of a passive type call for filtering techniques that are able to examine the spectrum with marked discriminations, i.e., in narrow bands, and are consequently also very costly to produce.

As regards, instead, stand-off gas detection of an active type, systems are known, which, in order to detect a specific gas, emit electromagnetic radiation at the wavelengths belonging to the IR spectral signature of the specific gas.

Said systems are frequently used for monitoring gas pipelines and for detecting the presence of possible leaks of gas, in particular methane and/or ethane.

In general, a system for detecting a leak of gas, for example methane, from a gas pipeline uses an array of active sources for illuminating the gas pipeline with electromagnetic radiation having the wavelengths belonging to the IR-absorption spectrum of methane.

Consequently, on the basis of the electromagnetic radiation back-scattered by the gas pipeline, the system detects a possible leakage of methane.

The present applicant has, however, noted that, in order to detect a very high number of noxious gases, with the current stand-off detection techniques of an active type as many active sources should be used as are the wavelengths that distinguish the IR spectral signatures of all the noxious gases to be detected. Such a solution, albeit solving the problem of the high false-alarm probability (FAP) typical of the stand-off detection techniques of a passive type, would involve very high, if not even prohibitive, costs linked to the provision of a very high number of active sources and of the corresponding systems of reception of the back-scattered electromagnetic radiation.

The aim of the present invention is hence to provide a stand-off gas-detection method of an active type that is able to alleviate the disadvantages just referred to.

The aforesaid aim is achieved by the present invention in so far as it relates to a method and a system for stand-off gas detection of an active type, according to what is defined in the annexed claims.

For a better understanding of the present invention, some preferred embodiments, provided purely by way of explanatory and non-limiting example, will now be illustrated with reference to the annexed drawings (not all in scale), wherein:
- Figure 1 shows five graphs, each representing absorption values of a respective gas at different wavelengths;
- Figure 2 shows a flowchart of a stand-off gas-detection method of an active type according to the present invention;
- Figure 3 shows a graph representing a spectrum of eigenvalues calculated according to a preferred embodiment of the present invention;

- Figure 4 is a schematic illustration of a stand-off gas-detection system of an active type according to the present invention; and
- Figure 5 is a schematic illustration of an urban scenario of an example in which the system illustrated in Figure 4 operates.

The ensuing description is provided to enable a person skilled in the sector to implement and use the invention.

Various modifications to the embodiments presented will be immediately evident to persons skilled in the sector, and the generic principles disclosed herein could be applied to other embodiments and applications, without thereby departing from the sphere of protection of the present invention.

Hence, the present invention is not to be understood as limited just to the embodiments described and illustrated, but it should be granted the widest sphere of protection consistently with the principles and the characteristics presented herein and defined in the annexed claims.

According to the present invention, a stand-off gas-detection method of an active type is provided.

In particular, Figure 2 illustrates a flowchart of a stand-off gas-detection method of an active type according to a preferred embodiment of the present invention, said method being designated as a whole by 20 in Figure 2.

In detail, the method 20 comprises:
- a step of a priori analysis 201;
- an emission step 202;
- an acquisition step 203; and
- a detection and identification step 204.

Entering into further detail, the step of a priori analysis 201 comprises determining, on the basis of an analysis of N IR-absorption spectra, each regarding a respective gas to be detected, M wavelengths on the basis of which all the N IR-absorption spectra can be represented.

In particular, N and M are integers greater than zero, i.e., N > 0 and M > 0.

Preferably, N is an integer greater than one, i.e., N > 1.

In what follows, for reasons of simplicity, the IR-absorption spectra are also called "IR spectral signatures", whilst the gases to be detected are called "target gases".

The M wavelengths determined in the step of a priori analysis 201 are such that each of the N IR spectral signatures can be reconstructed on the basis of a respective linear combination of said M wavelengths.

Conveniently, the step of a priori analysis 201 can comprise determining, on the basis of an analysis of the N IR spectral signatures of the target gases, the wavelengths necessary and sufficient to represent uniquely each target gas in the set of the gases that are to be represented.

The M wavelengths are determined on the basis of an analysis of the principal components (Principal-Component Analysis - PCA) of the N IR spectral signatures.

In particular, principal-component analysis, which is also referred to as "Karhunen-Loève transform" (KLT) or "Hotelling transform", is a technique for simplification of the data used in the field of multivariate statistics.

In detail, principal-component analysis, using appropriate mathematical procedures, enables a reduction of a more or less high number of variables, which are mutually correlated and represent as many characteristics of a phenomenon analysed, into a smaller number of mutually uncorrelated variables, which are referred to, precisely, as "principal components". The principal component with highest variance takes into account the majority of the variability of the initial variables, the principal component with the second highest variance takes into account the majority of the remaining variability of the initial variables, and so forth.

Entering into further detail, in order to determine the principal components of a given set of data, the following procedure is adopted:
- a matrix containing the given set of data is formed;
- the covariance matrix of the matrix containing the given set of data is calculated;
- eigenvectors and eigenvalues of the covariance matrix are determined; and
- the principal components are obtained on the basis of the eigenvalues and eigenvectors determined.

In particular, the eigenvector with the highest eigenvalue corresponds to the dimension that has the greatest correlation with the given set of data.

Once the principal components have been determined, the original data can thus be represented in the vector space of the principal components determined, by linear combinations of the orthonormal bases of said space, i.e., said principal components determined.

Described in what follows is an example of analysis of the principal components of N IR spectral signatures of target gases.

In particular, since toxic industrial gases and noxious chemical agents are characterized by IR spectral signatures that extend principally in the radiation bands of 3 to 5 µm and 8 to 20 µm, in the example described 103 absorption values are taken into consideration at different wavelengths in the radiation band of 3 to 20 µm for 14 different toxic industrial gases and noxious chemical agents (i.e., N = 14). With said absorption values a data matrix of the observations X of size 14 x 103 is formed, where 14 is the number of the observations made only once and 103 are the variables, i.e., the wavelengths.

Then, the covariance matrix C of the data matrix X is first calculated, said covariance matrix C having a size of 103 x 103, and then eigenvectors and eigenvalues of said covariance matrix C are determined.

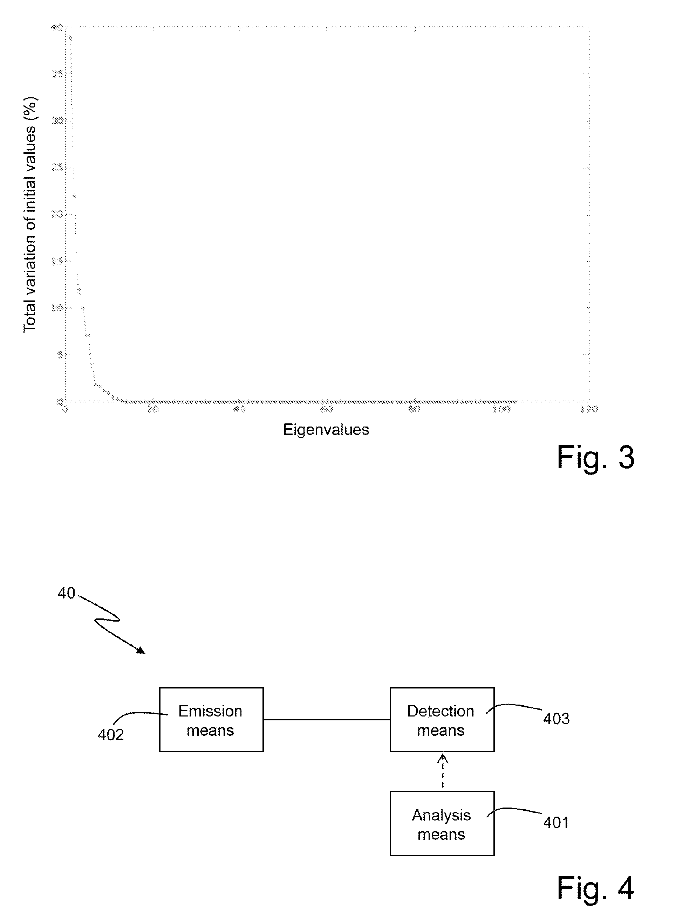

In this regard, illustrated in Figure 3 is a graph representing the percentage of total variation of the initial absorption values taken into account by each of the eigenvalues calculated for the example described.

In particular, as illustrated in Figure 3, the first six eigenvalues, which correspond to the six eigenvalues with highest value, represent approximately 94% of the distribution of the absorption values of the set of data.

Finally, accepting adoption of further selection algorithms, or accepting a representativity of the principal components lower than 94%, it is possible to reduce further the number of principal components on the basis of which it is possible to represent, in the space of the principal components, the 14 IR spectral signatures taken into consideration.

Consequently, on the basis of what has been described so far, the step of a priori analysis 201 enables determination, on the basis of an analysis of the N IR spectral signatures of the target gases, of M wavelengths, in particular the M principal components of the N IR spectral signatures, by means of which it is possible to represent all the N IR spectral signatures of the target gases.

To take up again the description of the method 20, the emission step 202 comprises emission of electromagnetic radiation at the M wavelengths determined.

In particular, emission of electromagnetic radiation at the M wavelengths determined comprises emission, for each of the M wavelengths determined, of a corresponding electromagnetic radiation having said wavelength.

Preferably, emission of electromagnetic radiation at the M wavelengths determined comprises emission of said electromagnetic radiation by means of L active sources, with 1≤*L*≤*M*.

Hence, if each of the L active sources is able to emit at just one of the M wavelengths determined, then in the emission step 202 L = M active sources can be used, whereas, if each of the L active sources is able to emit at more than one of the M wavelengths determined, then in the emission step 202 a number of active sources of less than M, i.e., L < M, can be used. Having available a source that is able to emit at all the M wavelengths determined, in the emission step 202 even just that active source could be used; i.e., we would have L = 1.

Furthermore, the acquisition step 203 comprises acquiring back-scattered electromagnetic radiation at the M wavelengths determined.

In particular, acquisition of back-scattered electromagnetic radiation at the M wavelengths determined comprises acquisition, for each of the M wavelengths determined, of a corresponding back-scattered electromagnetic radiation having said wavelength.

Conveniently, the acquisition step 203 comprises:
- receiving a back-scattered electromagnetic radiation comprising components, each having a respective wavelength, preferably comprised in the IR range of the electromagnetic spectrum, even more preferably comprised between 3 and 5 µm and/or between 8 and 20 µm;
- filtering, at the M wavelengths determined, said received electromagnetic radiation; and
- acquiring, for each of the M wavelengths determined, the received electromagnetic radiation filtered at said wavelength.

Finally, the detection and identification step 204 comprises detection and identification of one of the target gases on the basis of the corresponding IR spectral signature and of at least one of the electromagnetic radiations acquired.

Preferably, the detection and identification step 204 comprises:
- determining, for each of the M wavelengths determined, a corresponding absorption value on the basis of the corresponding electromagnetic radiation emitted and of the corresponding electromagnetic radiation acquired; and
- detecting and identifying one of the target gases on the basis of the corresponding IR spectral signature and of at least one of the absorption values determined, in particular on the basis of a comparison between the respective IR spectral signature and some of the absorption values determined, namely, on the basis of a comparison between the absorption values of the corresponding IR spectral signature and the absorption values determined at the wavelengths determined corresponding to the absorption values of the corresponding IR spectral signature.

Conveniently, the detection and identification step 204 can comprise, in addition to the analysis, a processing operation that leads to a classification of the target gases, differentiating them from the background gases and from the interfering gases, said processing operation being based upon so-called "pattern recognition" algorithms configured for making said classification.

Once differentiated and characterized on the basis of the respective IR spectral signatures, the background gases and the interfering gases can be subtracted in order to achieve a marked reduction in false-alarm probability.

In a typical urban environment, background gases normally comprise the substances listed in the table below, which also gives the respective percentages of concentration in the atmosphere:

| **Gases** | **Volume (%)** |
|---|---|
| Nitrogen N₂ | 78 |
| Oxygen O₂ | 20.9 |
| Rare gases (Argon, Krypton, Helium, Neon) | 0.9 |
| Carbon dioxide (CO₂) | 0.04 (variable) |
| Water vapour H₂O | 0-2 (variable) |

In addition to the gases listed above, in a typical urban environment, background gases generally comprise pollutant substances determined by human presence or for which human presence determines high concentrations, such as hydrocarbons in general, in particular benzene, benzopyrene, total suspended dust particles, etc.

Furthermore, pollutant substances with higher concentration in a typical urban environment also comprise sulphur dioxide SO₂, nitrogen oxides NOₓ, carbon monoxide CO, methane CH₄, and ozone O₃.

For some of these, it is possible to take into consideration a fixed concentration and a possible range of variability. High concentrations may in fact be reached in urban environments in certain situations and at certain times.

As regards interfering gases, these include all those gaseous substances with absorption spectra comprised in the wavelength range of 3 to 20 µm, in particular pesticides and volatile organic compounds (VOCs) deriving from glues, paints, cleaning agents, and perfumes.

Finally, target gases, as has already been said, comprise toxic industrial gases and noxious chemical agents.

Furthermore, also provided according to the present invention is a stand-off gas-detection system of an active type configured for implementing the detection method described so far.

In particular, illustrated in Figure 4 is a block diagram representing a stand-off gas-detection system of an active type according to a preferred embodiment of the present invention, said system being designated as a whole by 40 in Figure 4.

In detail, the system 40 comprises:
- analysis means 401;
- emission means 402; and
- detection means 403, coupled to said emission means 402.

Entering into further detail, the analysis means 401 are configured for executing the step of a priori analysis 201, whereas the detection means 403 are configured for:
- controlling the emission means 401 so that they execute the emission step 202;
- executing the acquisition step 203; and
- executing the detection and identification step 204.

Preferably, the analysis means 401 are moreover configured for supplying the N IR spectral signatures of the target gases to be detected and the M wavelengths determined in the step of a priori analysis 201 to the detection means 403, as represented in Figure 4 by a dashed arrow that joins the analysis means 401 to the detection means 403, the detection means 403 being moreover configured for storing said N IR spectral signatures and said M wavelengths determined, supplied by the analysis means 401.

In addition, on the detection means 403 the stored IR spectral signatures can be updated in real time by modifying one of the stored IR spectral signatures and/or by storing a new IR spectral signature of a further target gas to be detected and/or by replacing one of the stored IR spectral signatures with another IR spectral signature of another target gas to be detected and/or by erasing one of the stored IR spectral signatures because it is no longer required to detect the corresponding target gas.

Likewise, on the detection means 403 the stored M wavelengths determined can be updated in real time by modifying one of the stored M wavelengths determined and/or by storing a new wavelength determined and/or by replacing one of the stored M wavelengths determined with another wavelength determined and/or by erasing one of the stored M wavelengths determined. In particular, in the detection means 403 the stored IR spectral signatures and the stored M wavelengths determined can be conveniently updated by a human operator and/or by the analysis means 401 and/or by a control station (not illustrated in Figure 4) with which the detection means 403 can be remotely connected, for example by wireless communication means.

Preferably, the emission means 402 comprise L active sources, with 1≤*L*≤*M*, that can be tuned continuously in respective operating wavelength bands comprised in the spectral region of 3 to 20 µm.

Furthermore, said L active sources are programmable; i.e., they can be configured for emitting electromagnetic radiation at different wavelengths comprised in the respective operating bands, in particular in respective neighbourhoods of the M wavelengths determined.

In particular, as described previously, if each of the L active sources is able to emit at just one of the M wavelengths determined, then the emission means 402 comprise L = M active sources, whereas, if each of the L active sources is able to emit at more than one of the M wavelengths determined, then the emission means 402 comprise a number of active sources of less than M, i.e., L < M. Having available a source that is able to emit at all the M wavelengths determined, the emission means 402 could even comprise just that active source; i.e., we would have L = 1.

Consequently, the number L of active sources depends upon the characteristics of tunability of the active sources.

Conveniently, the L active sources are quantum-cascade laser sources.

Even more conveniently, the L active sources are integrated on a single support and are able to ensure for the system 40 a good stand-off detection capacity.

Preferably, the detection means 403 comprise:
- receiving means (not illustrated in Figure 4), configured for receiving a back-scattered electromagnetic radiation comprising components, each having a respective wavelength;
- filtering means (not illustrated in Figure 4), which are coupled to the receiving means and are programmable; i.e., they can be configured, for filtering, at different wavelengths, the electromagnetic radiation received; and
- control and processing means (not illustrated in Figure 4), for example an appropriately programmed computer, configured for:
   - causing the active sources to be configured for executing the emission step 202;
   - controlling the active sources so that they execute the emission step 202;
   - causing the filtering means to be configured for filtering at the M wavelengths determined the electromagnetic radiation received by the receiving means;
   - controlling the filtering means so that they filter at the M wavelengths determined the electromagnetic radiation received by the receiving means;
   - acquiring from the filtering means, for each of the M wavelengths determined, the received electromagnetic radiation filtered at said wavelength; and
   - executing the detection and identification step 204.

Conveniently, appropriate optics interface the system 40, in particular the active sources and the receiving means, with the outside world.

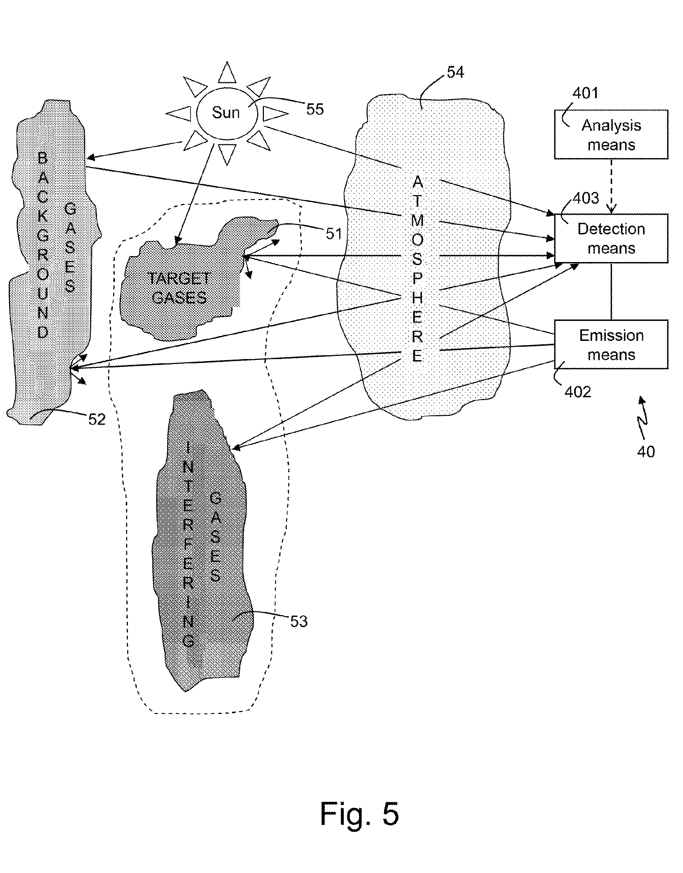

Illustrated schematically in Figure 5 is an urban scenario presented by way of example, in which the system 40 operates.

In particular, represented schematically in Figure 5, in addition to the system 40, are target gases 51, background gases 52, interfering gases 53, atmosphere 54, and the Sun 55. On the basis of what has been described previously, Figure 5 is self-explanatory.

From the preceding description, the advantages that the invention affords may be immediately understood.

In particular, it should be emphasized how the present invention overcomes the problems presented by known gas-detection techniques, namely, the problem of contamination/saturation of point detection systems, the problem of high false-alarm probability of stand-off detection techniques of a passive type, and the problem of known stand-off detection techniques of an active type linked to the very high costs necessary for providing a very high number of active sources for detecting a large number of gases.

Furthermore, the gas-detection system according to the present invention has a high operative versatility linked to the possibility of updating and changing the set of the gases to be detected owing to and on the basis of the programmability of the active sources and of the filtering means. In fact, thanks to these characteristics, the gas-detection system according to the present invention can assume different operating configurations, each specific for a preset purpose and/or for a preset use.

Another advantage of the present invention is represented by the lower response times, given that the system effects direct querying at the wavelengths to be detected.

A further advantage of the present invention derives from the fact that it is able to supply not only the alarm of the threat but also the distance of said threat, guaranteeing, as mentioned previously, non-contamination of the detection system.

Given then that it is possible to modify the amplitude of the radiation emitted, it is possible to improve, in line with the technologies available, the capacity of stand-off detection of the system itself and enable detection even of gases with very low concentration, in particular up to parts per billion (ppb).

Consequently, the gas-detection system according to the present invention, at contained production costs as compared to those of stand-off detection systems built according to the known techniques, presents a very high level of performance.

A further advantage of the present invention derives from the fact that it makes it possible to minimize of the number of the filters necessary in reception, to scan the distant scenario depending upon the energy available, and to provide a detection system that can be adapted also to individual emissions or, as mentioned previously, specific emissions for specific purposes.

A final advantage of the present invention derives from the fact that it is possible to obtain the gas-detection system by exploiting integration in appropriately adapted pre-existing systems in which the presence of the laser guarantees other functions in different operating modes.

Finally, it is clear that various modifications may be made to the present invention, all of which fall within the sphere of protection thereof, as defined in the annexed claims.

## Claims

1. A method (20) for detecting N gases, each having a corresponding spectral signature, N being an integer greater than zero, said method (20) comprising:
• an a priori analysis step (201), which comprises determining, on the basis of a Principal-Component Analysis of the spectral signatures of the N gases, M wavelengths on the basis of which said spectral signatures can be represented, M being an integer greater than zero;
• an emission step (202), which comprises emitting, for each of the M wavelengths determined, a corresponding electromagnetic radiation having said wavelength;
• an acquisition step (203), which comprises acquiring, for each of the M wavelengths determined, a corresponding back-scattered electromagnetic radiation having said wavelength; and
• a detection and identification step (204), which comprises detecting and identifying one of the N gases on the basis of the corresponding spectral signature and of at least one electromagnetic radiation acquired.

2. The method according to Claim 1, wherein the M wavelengths determined are such that each of the spectral signatures of the N gases can be represented on the basis of a respective linear combination of said M wavelengths determined.

3. The method according to Claim 1 or Claim 2, wherein determining, on the basis of a a Principal-Component Analysis of the spectral signatures of the N gases, M wavelengths comprises performing an analysis of principal components of the spectral signatures of the N gases; performing an analysis of principal components of the spectral signatures of the N gases comprising:
• forming a first matrix with values of the spectral signatures of the N gases;
• calculating a covariance matrix of the first matrix;
• determining eigenvectors and eigenvalues of the covariance matrix; and
• determining the M wavelengths on the basis of at least one of the eigenvalues determined.

4. The method according to any one of the preceding claims, wherein the acquisition step (203) further comprises:
• receiving a back-scattered electromagnetic radiation comprising components, each having a respective wavelength;
acquiring, for each of the M wavelengths determined, a corresponding back-scattered electromagnetic radiation having said wavelength comprising acquiring, for each of the M wavelengths determined, a corresponding component of the received electromagnetic radiation having said wavelength.

5. The method according to Claim 4, wherein acquiring, for each of the M wavelengths determined, a corresponding component of the received electromagnetic radiation having said wavelength comprises:
• filtering at the M wavelengths determined the electromagnetic radiation received; and
• acquiring, for each of the M wavelengths determined, the received electromagnetic radiation filtered at said wavelength.

6. The method according to any one of the preceding claims, wherein detecting and identifying one of the N gases on the basis of the corresponding spectral signature and of at least one electromagnetic radiation acquired comprises detecting and identifying one of the N gases on the basis of the corresponding spectral signature, of at least one electromagnetic radiation acquired, and of at least one electromagnetic radiation emitted.

7. The method according to Claim 6, wherein the spectral signatures are spectra of infrared absorption of the N gases, and wherein the detection and identification step (204) further comprises:
• determining, for each of the M wavelengths determined, a corresponding absorption value on the basis of the corresponding electromagnetic radiation emitted and of the corresponding electromagnetic radiation acquired;
detecting and identifying one of the N gases on the basis of the corresponding spectral signature, of at least one electromagnetic radiation acquired, and of at least one electromagnetic radiation emitted comprising detecting and identifying one of the N gases on the basis of the corresponding spectrum of infrared absorption and of at least one of the absorption values determined.

8. A gas-detection system (40) configured to implement the method (20) according to any one of the preceding claims.

9. The system according to Claim 8, comprising:
• analysis means (401), configured to perform said a priori analysis step (201);
• emission means (402); and
• detection means (403), coupled to said emission means (402) and configured to:
- control the emission means (402) so that they execute said emission step (202);
- perform said acquisition step (203); and
- perform said detection and identification step (204).

10. The system according to Claim 9, wherein the analysis means (401) are further configured to supply the spectral signatures and the M wavelengths determined to the detection means (403); the detection means (403) being further configured to store said spectral signatures and said M wavelengths determined supplied by the analysis means (401) and to enable a first updating of the stored spectral signatures and a second updating of the stored M wavelengths determined; said first updating comprising one or more of the following operations: modifying one of the stored spectral signatures, storing a new spectral signature of a further gas to be detected, replacing one of the stored spectral signatures with another spectral signature of another gas to be detected, erasing one of the stored spectral signatures; said second updating comprising one or more of the following operations: modifying one of the stored M wavelengths determined, storing a new wavelength determined, replacing one of the stored M wavelengths determined with another wavelength determined, erasing one of the stored M wavelengths determined.

11. The system according to Claim 10, wherein the analysis means (401) are further configured to perform the first and second updatings on the detection means (403).

12. The system according to any one of Claims 9-11, wherein the emission means (402) comprise L active sources tunable in respective operating wavelength bands and configurable to emit electromagnetic radiation at different wavelengths comprised in the respective operating wavelength bands, L being an integer comprised between one and M.

13. The system according to Claim 12, wherein the L active sources are quantum-cascade laser sources.

14. The system according to Claim 12 or Claim 13, wherein the detection means (403) comprise:
• receiving means, configured to receive a back-scattered electromagnetic radiation comprising components, each having a respective wavelength; and
• control and processing means configured to:
- cause said L active sources to become configured to perform said emission step (202);
- control said L active sources so that they perform said emission step (202);
- acquire, for each of the M wavelengths determined, a corresponding component having said wavelength of the electromagnetic radiation received by the receiving means; and
- perform said detection and identification step (204).

15. The system according to Claim 14, wherein the detection means (403) also comprise:
• filtering means coupled to the receiving means and configurable to filter at different wavelengths the electromagnetic radiation received by the receiving means;
the control and processing means being further configured to:
• cause the filtering means to become configured to filter at the M wavelengths determined the electromagnetic radiation received by the receiving means;
• control the filtering means so that they filter at the M wavelengths determined the electromagnetic radiation received by the receiving means; and
• acquire from the filtering means, for each of the M wavelengths determined, the received electromagnetic radiation filtered at said wavelength.

16. A processing apparatus configured as the analysis means (401) of the gas-detection system (40) according to any one of Claims 9-15.

17. A software program product comprising software instructions for causing a programmable processing apparatus to become configured as the analysis means (401) of the gas-detection system (40) according to any one of Claims 9-15.

18. A processing apparatus configured as the control and processing means of the gas-detection system (40) according to either Claim 14 or Claim 15.

19. A software program product comprising software instructions for causing a programmable processing apparatus to become configured as the control and processing means of the gas-detection system (40) according to either Claim 14 or Claim 15.
